(19) Europäisches Patentamt
European Patent Office
Office européen des brevets

(11) Publication number: **0 264 878 B1**

# (12) EUROPEAN PATENT SPECIFICATION

(45) Date of publication of patent specification: **03.04.91**

(51) Int. Cl.5: **C09B 62/09**, C09B 62/513, D06P 1/38

(21) Application number: **87115256.7**

(22) Date of filing: **19.10.87**

The file contains technical information submitted after the application was filed and not included in this specification

## (54) Water-soluble disazo colorants.

(30) Priority: **20.10.86 JP 247482/86**

(43) Date of publication of application:
**27.04.88 Bulletin 88/17**

(45) Publication of the grant of the patent:
**03.04.91 Bulletin 91/14**

(84) Designated Contracting States:
**CH DE GB LI**

(56) References cited:
**DE-A- 3 113 473**
**JP-A- 57 754**

(73) Proprietor: **MITSUBISHI KASEI CORPORATION**
**5-2, Marunouchi 2-chome Chiyoda-ku**
**Tokyo 100(JP)**

(72) Inventor: **Himeno, Kiyoshi**
**8-702-12, Sainokami 2-chome Yahatanishi-ku**
**Kitakyushu-shi Fukuoka(JP)**
Inventor: **Hihara, Toshio**
**2-71-503, Aoyama 1-chome Yahatanishi-ku**
**Kitakyushu-shi Fukuoka(JP)**
Inventor: **Shimizu, Yukiharu**
**5-312-11, Sainokami 1-chome Yahatanishi-ku**
**Kitakyushu-shi Fukuoka(JP)**

(74) Representative: **Vossius & Partner**
**Siebertstrasse 4 P.O. Box 86 07 67**
**W-8000 München 86(DE)**

**EP 0 264 878 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to navy blue-series water-soluble disazo colorants having a novel structure. More particularly, the invention relates to water-soluble disazo colorants which have a vinylsulfone type reactive group and a mono- or di-halogenotriazine type reactive group in the structure and, in particular, in the case of using as dyestuff for cellulose or nitrogen-containing fibers, are excellent in various color fastnesses and level dyeing and also can give densely dyed products.

In the case of dyeing cellulose fibers or nitrogen-containing fibers, water-soluble reactive dyestuffs are usually used and the reactive dyestuffs are required to have excellent properties in level dyeing, and capable of providing densely dyed products having good properties in various color fastnesses. The characteristics of such reactive dyestuffs are delicately varied according to the fundamental skeleton, the kinds of substituents, the kinds of reactive groups, and a combination thereof and dyestuffs having various structures have hitherto been proposed. As the results thereof, dyestuffs having a considerably satisfactory level have been practically used at present.

JP-A-57/57754 describes reactive disazo dyes represented by the general formula (B)

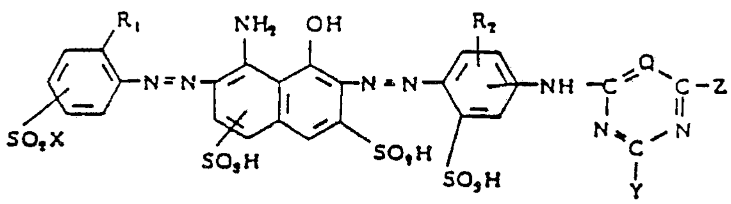

(B)

used to dye natural and artificial fibres, especially cellulose fibres in navy blue to black colors.

DE-A-31 13 473 comprises reactive disazo compounds of the general formula (C)

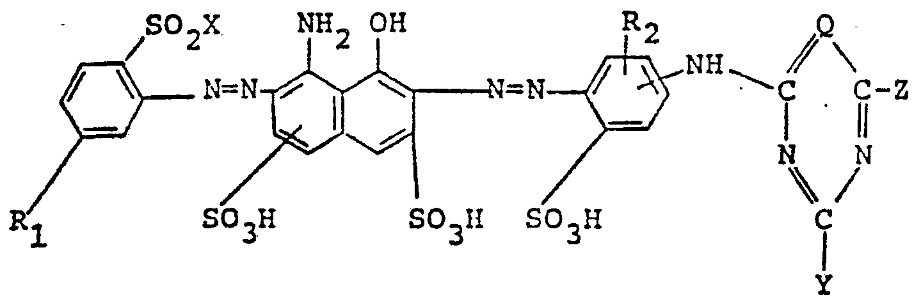

(C)

which are used to dye or to print cellulose fibers.

However, in the case of reactive dyestuff having a navy blue tone, dyestuffs having excellent characteristics in various points have never been found.

For example, JP-A-118459/86 discloses navy blue series reactive dyestuffs shown by formula (A) but this dyestuff is not always satisfactory in color fastness to chlorine and perspiration under sunlight.

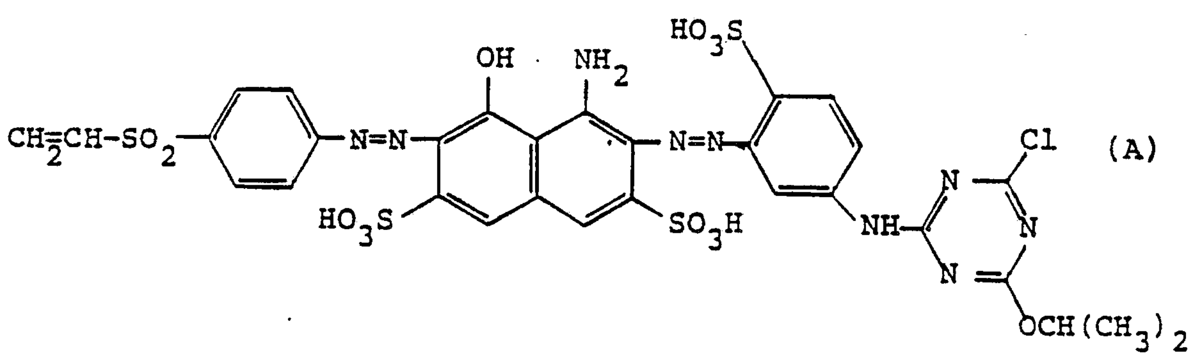

(A)

That is, conventional dyestuffs of navy blue tone are frequently insufficient in various color fastnesses in the case that they show good level dyeing properties or on the contrary, they are frequently inferior in level

dyeing properties in the case that they are excellent in color fastnesses. Also, these reactive dyestuffs are not sufficient in build-up properties.

The object of this invention is, therefore, to provide reactive colorants of navy blue series tone excellent in level dyeing properties, densely dyeing properties, build-up properties and various fastnesses to sunlight, chlorine, perspiration under sunlight, etc.

That is, according to this invention, there are provided water-soluble disazo colorants, represented in the form of the free acid, by the following formula (I)

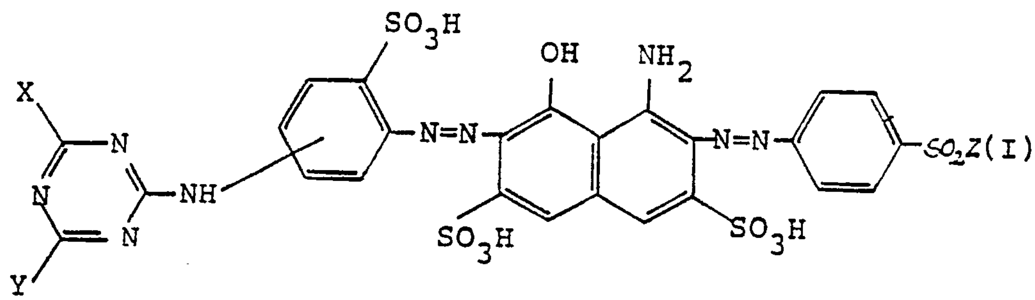

wherein, X represents a chlorine or fluorine atom; Y represents a chlorine atom or $-OR^1$ wherein $R^1$ represents an alkyl group or $-CH_2CH=CH_2$, and Z represents $-CH=CH_2$, $-CH_2CH_2Cl$, or $-CH_2CH_2OSO_3H$ with the proviso that when X is a chlorine atom and the residue

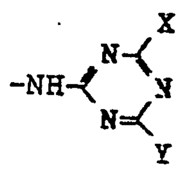

is attached to the meta position of the benzene ring with respect to the azo group, Y does not represent a methoxy or ethoxy group.

The present invention is explained in detail below.

Y represents a chlorine atom or $-OR^1$ , and examples of the alkyl group shown by $R^1$ are a straight chain or branched alkyl group having 1 to 8 carbon atoms, such as a methyl group, an ethyl group, a propyl group, a hexyl group, an octyl group or are, preferably a straight chain or branched alkyl group having 1 to 4 carbon atoms, such as an ethyl group or a propyl group.

The bonding position of the halogenotriazine group which is a reactive group may be any optional position of the benzene ring except the bonding position of the sulfo group which corresponds to the 2-position with respect to the azo group, but is usually at the 4- or 5-position, and preferably the 5-position with respect to the bonding position of the azo group with the proviso that when X is a chlorine atom and the residue

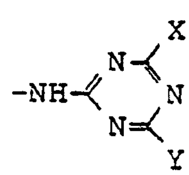

is not attached to the meta position of the benzene ring with respect to the azo group, Y does not represent a methoxy or ethoxy group.

Preferred are water-soluble disazo colorants wherein the colorantes are represented, in the form of the free acid, by the formula (I-i)

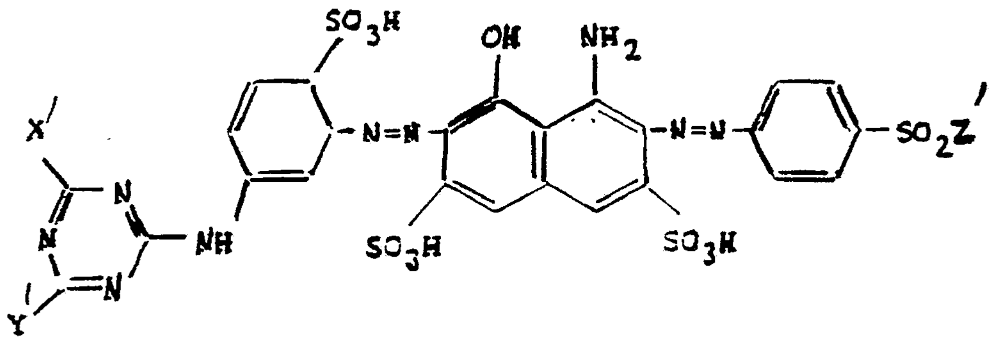 (I-i)

wherein X' is a chlorine or fluorine atom, Y' is a chlorine atom or $-OR^{1'}$ wherein $R^{1'}$ is an alkyl group having 1 to 8 carbon atoms, or $-CH_2CH=CH_2$ ; and Z' is $-CH=CH_2$, $-CH_2CH_2Cl$ or $-CH_2CH_2OSO_3H$; with the proviso that when X' is a chlorine atom, Y' does not represent a methoxy or ethoxy group.

Furthermore the water-soluble disazo colorants of this invention are preferably represented, in the form of free acid, by the formula (I-ii)

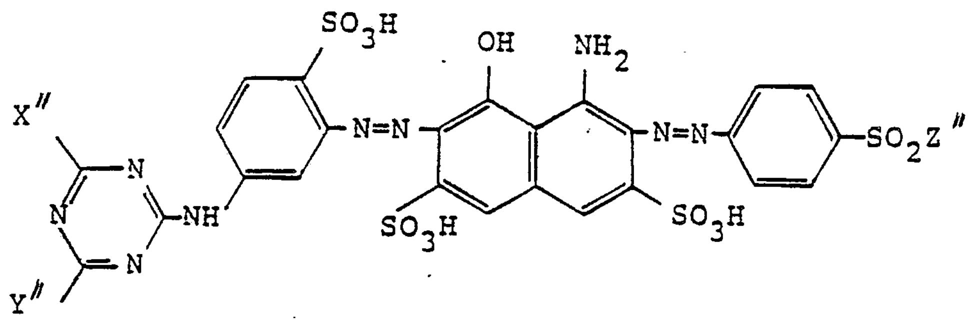 (I-ii)

wherein X" represents a chlorine atom or a fluorine atom; Y" represents $-OR^{1''}$ wherein $R^{1''}$ represents an alkyl group having 1 to 4 carbon atoms and Z" represents $-CH=CH_2$, $-CH_2CH_2$ Cl, or $-CH_2CH_2OSO_3H$; with the proviso that when X" is a chlorine atom, Y" does not represent a methoxy or ethoxy group. Most prefered are water-soluble disazo colorants in the form of the free acid by the formula (I-a)

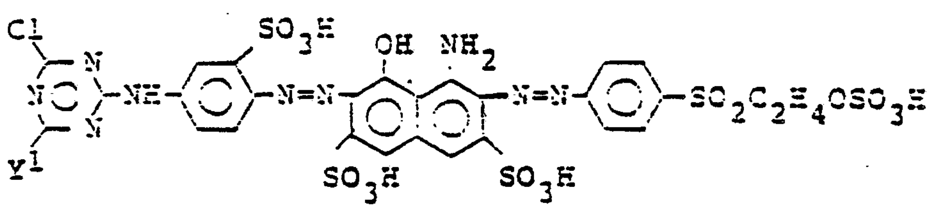 (I-a)

wherein $Y^1$ represents a chlorine atom, $-OCH_3$ or $-OC_2H_5$ group, or formula (I-b)

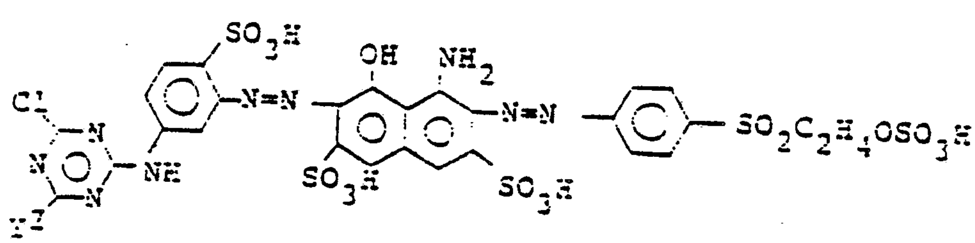 (1-b)

wherein $Y^2$ represents a chlorine atom

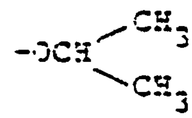

, or $-OCH_2CH=CH_2$ group.

The disazo colorants of this invention are present in the form or the free acid or the form of a salt thereof. As salts are usually alkali metal salts and alkaline earth metal salts and of these salts, lithium salts, sodium salts, and potassium salts are particularly preferred.

The disazo colorants of this invention shown by formula (I) described above can be produced by the following methods.

For example, by condensing 1 mole of 2,4-diaminobenzenesulfonic acid and 1 mole of a triazine compound represented by formula (II)

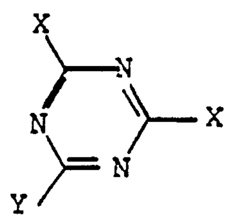

(II)

wherein X and Y have the same significance as defined in formula (I) in an aqueous medium. A compound represented by formula (III) is obtained,

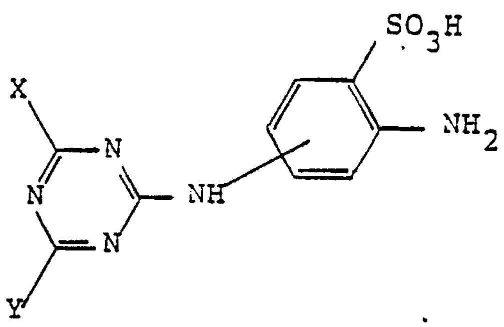

(III)

wherein X and Y have the same significance as defined in formula (I)). Then, after diazotizing the compound of formula (III) thus obtained, the diazotized compound is coupled with 1 mole of a monoazo compound represented by formula (IV)

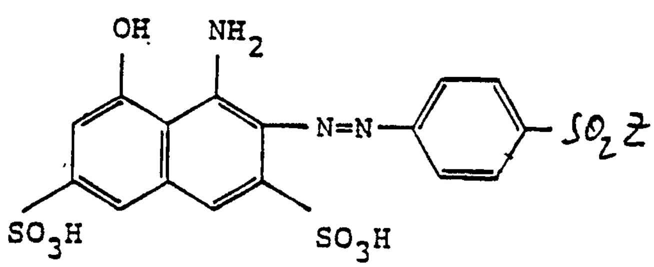

(IV)

wherein Z has the same significance a s defined in formula (I)), in an alkaline condition to provide the desired disazo colorant. For obtaining the disazo colorant from a reaction mixture, a salting out method is usually used but the reaction mixture may be spray-dried as it is.

The disazo colorants of this invention can be widely utilized as dyestuffs for dyeing fibers or cloths colorants for coloring papers or synthetic resins, and colorants for ink-jet printing ink but are excellent in adaptability as dyestuffs for dyeing fibers or cloths.

In the case of using the disazo colorants of this invention for dyeing fibers, examples of fibers being dyed are cellulose series fibers such as cotton, viscose rayon, cupraammonium rayon, hemp, and nitrogen-containing fibers such as polyamide fibers, wool and silk, but cellulose fibers are particularly preferred. Also, these fibers may be used as mixed fibers with polyester, triacetate or polyacrylonitrile fibers. Furthermore, mixed fibers of cellulose fibers and nitrogen-containing fibers can be used in this invention.

For dyeing cellulose fibers or nitrogen-containing fibers using the disazo colorants of this invention, the fibers can be dyed according to an ordinary method in the presence of an acid composed of an inorganic alkali such as sodium hydrogencarbonate or sodium carbonate, or an organic base such as triethylamine.

As a dyeing method in this invention, a dip dyeing is particularly suitable and in this case, the dyeing temperature is suitable from about 40 ° C to 80 ° C.

Furthermore, the disazo colorants of this invention can be used for other dyeing methods which can be applied in the case of using vinylsulfone type reactive dyes, such as a cold pad batch method, pad steam method and discharge printing method.

The disazo colorants of this invention are water-soluble navy blue series colorants having both a vinylsulfone type reactive group and a mono- or di-halogenotriazine type reactive group in the structure. The disazo colorants of this invention can dye cellulose fiber or nitrogen-containing fibers densely and with good level dyeing properties, are excellent in build-up properties, and further excellent in color fastnesses to light, chlorine and perspiration under sunlight.

The present invention is hereinafter described in greater detail with reference to examples, which are not to be construed as limiting the scope thereof.

COMPARATIVE EXAMPLE 1

Preparation of a colorant

After diazotizing 1 mole of an amino compound shown by the following structure

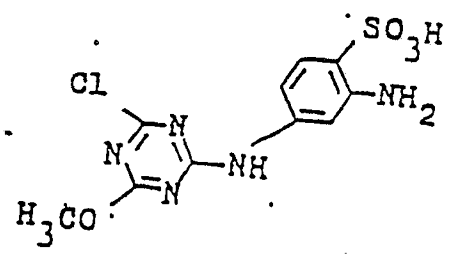

in an ordinary manner, the diazotized compound was coupled with 1 mole of a monoazo compound shown by the following formula

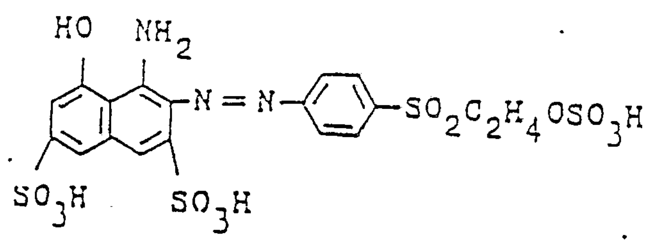

in an aqueous medium at temperature of from 0 ° C to 5 ° C and at pH of from 7 to 8. After the coupling reaction was finished, the reaction mixture obtained was salted out with a potassium chloride, filtered, and dried to provide a disazo colorant having the following formula (shown by the form of free acid) and the maximum absorption wavelength of 598 nm (water).

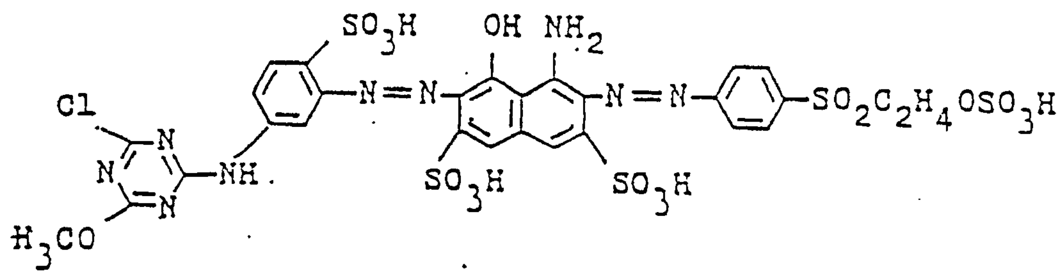

Dyeing Test

0.2 g of the disazo colorant obtained as described above was dissolved in 200 ml of water and after adding thereto 10 g of Glauber's salt and dissolving therein, 10 g of an unmercerized knitted cotton was immersed in the dyeing bath thus prepared followed by raising the temperature thereof to 60 °C over a period of 30 minutes. Thereafter, 3.0 g of sodium carbonate was added thereto and after performing dyeing for one hour at 60 °C, the dyed product was washed with water, soaped, washed with water, and dried to provide a product dyed in navy blue color.

The dyed product thus obtained was uniformly and densely dyed, and was excellent in light fastness (JIS L-0842) as grade 4 to 5, was very excellent in chlorine fastness (effective chlorine of 20 ppm according to JIS L-0884) as grade 4 to 5, and was excellent in perspiration fastness under sunlight (by alkali method of JIS L-0888A) as Grade 3.

EXAMPLE 1

When the disazo colorants of this invention shown in Table 1 described below (shown in the forms of free acids) were prepared according to the same method as shown in comparative Example 1 and cotton cloths were dyed using the colorants by the same manner as in comparative Example 1, uniformly and densely dyed products were obtained.

These dyed products obtained were excellent in light fastness (JIS-L0842) as grade 4 to 5, in chlorine fastness (effective chlorine of 20 ppm according to JIS L-0884) as grade 4 to 5, and in perspiration fastness under sunlight (an alkali method of JIS-L-0888A) as grade 3.

Table 1

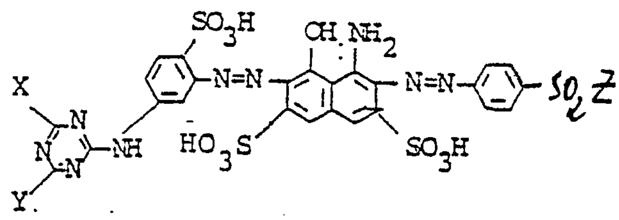

| No. | -X | -Y | 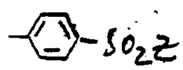 | Tone of cotton cloth | λmax (water) nm |
|---|---|---|---|---|---|
| 1-1 | -F | $-OCH_3$ | 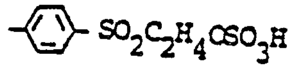 | Navy blue | 598 |
| 1-2 | -Cl | -Cl | 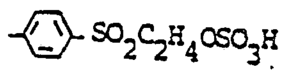 | " | 603 |
| 1-3 | -Cl | $-OCH_2CH{=}CH_2$ | " | " | 598 |
| 1-4 | -Cl | 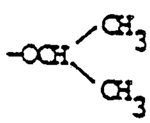 | " | " | 598 |
| 1-5 | -F | " | " | " | 598 |
| 1-6 | -Cl | $-OC_8H_{17}$ | " | " | 598 |
| 1-7 | -F | $-OC_6H_{13}$ | " | " | 598 |

Table 2

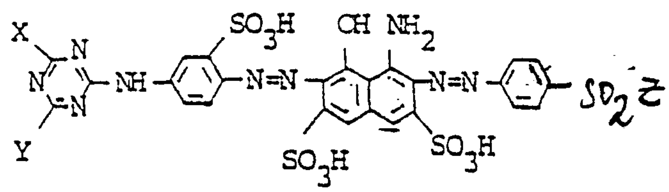

| No. | -X | -Y | 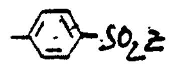 | Tone of cotton cloth | λmax (water) nm |
|---|---|---|---|---|---|
| 2-1 | -Cl | $-OCH_3$ | 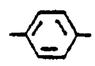 $SO_2C_2H_4OSO_3H$ | Greenish navy blue | 625 |
| 2-2 | " | 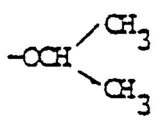 | " | " | 625 |
| 2-3 | " | -Cl | " | " | 627 |
| 2-4 | " | $-OCH_2CH=CH_2$ | 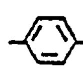 $SO_2C_2H_4Cl$ | " | 625 |
| 2-5 | -Cl | $-OC_2H_5$ | 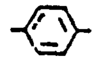 $SO_2C_2H_4OSO_3H$ | " | 624 |

EXAMPLE 2

The disazo colorants of this invention shown in Table 2 (shown in the forms of free acids) were prepared according to the same method as shown in comparative Example 1 and cotton cloths were dyed with the colorant by the methods as in comparative Example 1. Thus, uniformly and densely dyed products were obtained. Also, these dyed products were excellent in light fastness (JIS L-0842) as grade 4 to 5⁻, chlorine fastness (effective chlorine of 20 ppm according to JIS L-0884) as grade 4 to 5, and perspiration fastness under sunlight (alkali method of JIS L-0888A) as grade 3.

## Claims

**1.** Water-soluble disazo colorants represented, in the form of the free acid, by formula (I)

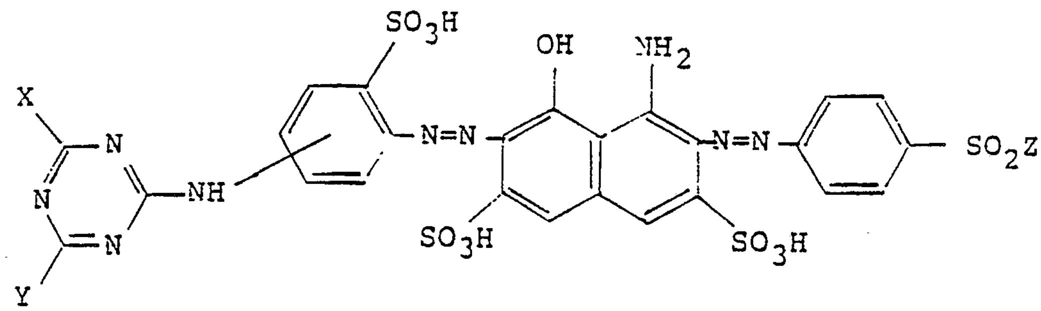 (I)

wherein, X represents a chlorine or fluorine atom; Y represents a chlorine atom or $-OR^1$, wherein $R^1$ represents an alkyl group or $-CH_2CH=CH_2$ and Z represents $-CH=CH_2$, $-CH_2CH_2Cl$, or $-CH_2CH_2OSO_3H$ with the proviso that when X is a chlorine atom and the residue

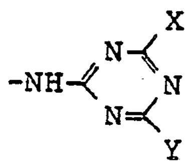

is attached to the meta position of the benzene ring with respect to the azo group, Y does not represent a methoxy or ethoxy group.

2. The water-soluble disazo colorants as in claim 1, wherein Y is a chlorine atom or $-OR^1$ wherein $R^1$ is an alkyl group having 1 to 8 carbon atoms or $-CH_2CH=CH_2$.

3. The water-soluble disazo colorants as in claim 1, wherein Y is a chlorine atom or $-OR^1$ wherein $R^1$ is an alkyl group having 1 to 4 carbon atoms, or $-CH_2CH=CH_2$.

4. The water-soluble disazo colorants as in claim 1, wherein the colorants are represented, in the form of the free acid, by the formula (I-i)

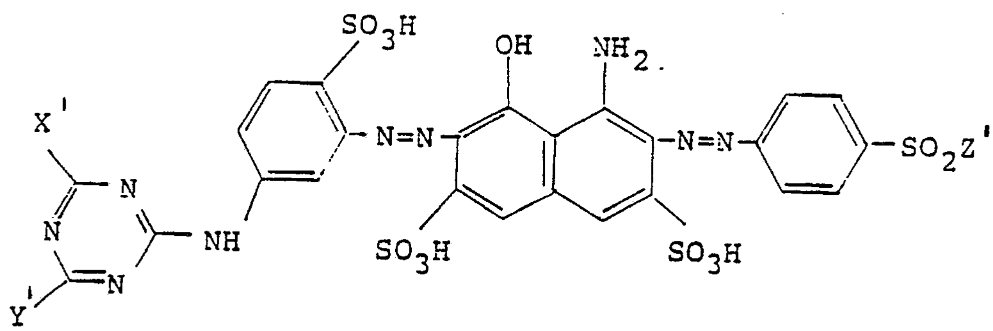 (I-i)

wherein X' is a chlorine or fluorine atom, Y' is a chlorine atom or $-OR^{1'}$ wherein $R^{1'}$ is an alkyl group having 1 to 8 carbon atoms, or $-CH_2CH=CH_2$ ; and Z' is $-CH=CH_2$, $-CH_2CH_2Cl$ or $-CH_2CH_2OSO_3H$; with the proviso that when X' is a chlorine atom, Y'does not represent a methoxy or ethoxy group.

5. The water-soluble disazo colorants as in claim 1, wherein the colorants are represented, in the form of the free acid, by the formula (I-ii)

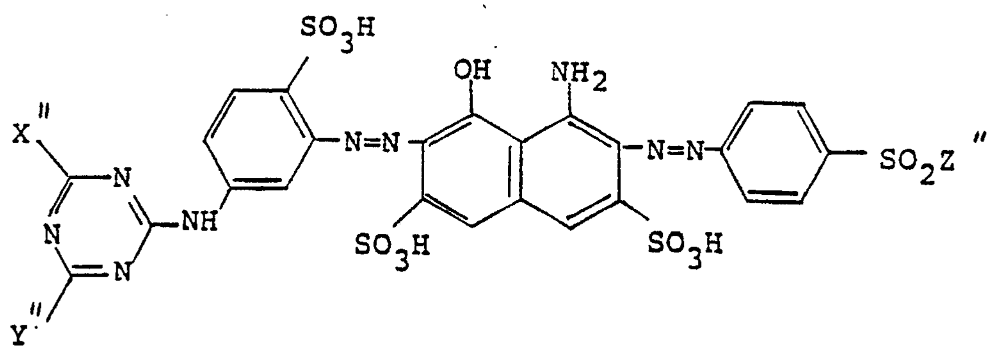

(I -ii)

wherein X" represents a chlorine or fluorine atom, Y" represents -OR[1"] wherein R[1"] represents an alkyl group having 1 to 4 carbon atoms and Z" represents $-CH=CH_2$, $-CH_2CH_2Cl$, or $-CH_2CH_2OSO_2H$; with the proviso that when X" is a chlorine atom, Y" does not represent a methoxy or ethoxy group.

6. The water-soluble disazo colorants as in claim 1, in the form of a free acid by the formula (I-a)

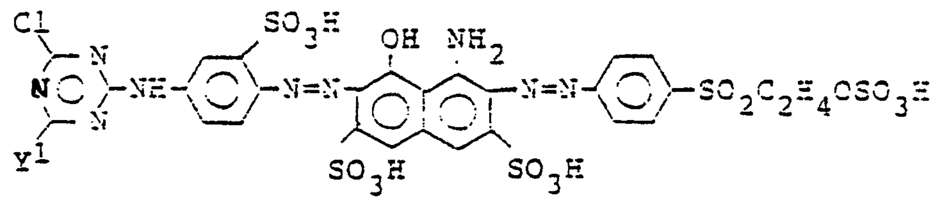

(I-a)

wherein $y^1$ represents a chlorine atom, $-OCH_3$ or $-OC_2H_5$ group, or formula (I-b)

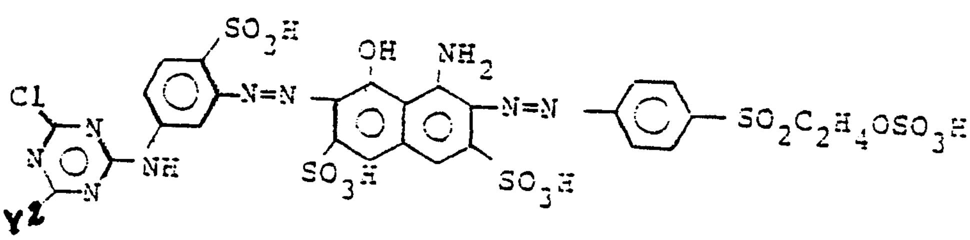

(1-b)

wherein $Y^2$ represents a chlorine atom,

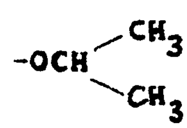

or $-OCH_2CH=CH_2$ group.

7. The use of the disazo colorants of formula (I) according to Claim 1 for dyeing cellulose and nitrogen containing fibers.

## Revendications

1. Colorants disazoïques solubles dans l'eau représentés, sous la forme de l'acide libre, par la formule (I)

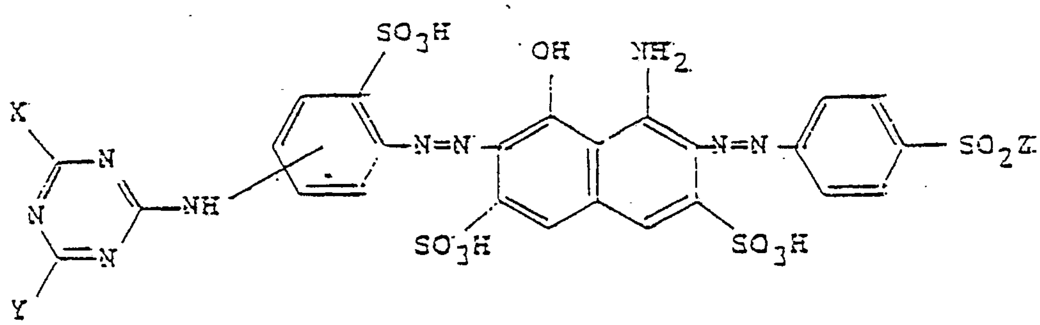

(I)

dans laquelle X représente un atome de chlore ou de fluor, Y représente un atome de chlore ou $-OR^1$, dans lequel $R^1$ représente un groupe alkyle ou $-CH_2CH=CH_2$ et Z représente $-CH=CH_2$, $-CH_2CH_2Cl$, ou $-CH_2CH_2OSO_3H$, à la condition que lorsque X est un atome de chlore et que le reste

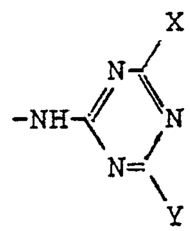

est lié à la position méta de l'anneau de benzène par rapport au groupe azoïque, Y ne représente pas un groupe méthoxy ou éthoxy.

2. Colorants disazoïques solubles dans l'eau selon la revendication 1, dans lesquels Y est un atome de chlore ou $-OR^1$ dans lequel $R^1$ est un groupe alkyle ayant 1 à 8 atomes de carbone ou $-CH_2CH=CH_2$.

3. Colorants disazoïques solubles dans l'eau selon la revendication 1, dans lesquels Y est un atome de chlore ou $-OR^1$ dans lequel $R^1$ est un groupe alkyle ayant 1 à 4 atomes de carbone ou $-CH_2CH=CH_2$,

4. Colorants disazoïques solubles dans l'eau selon la revendication 1, caractérisés en ce que les colorants sont représentés sous la forme de l'acide libre, par la formule (I-i)

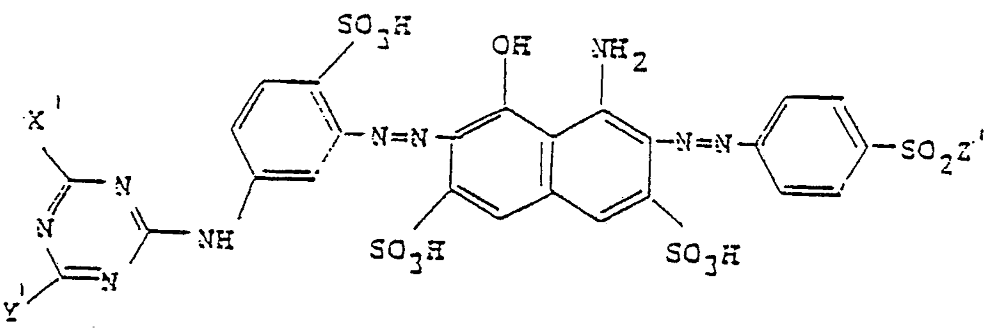

(I-i) ~~(I)~~

dans laquelle X' est un atome de chlore ou de fluor, Y' est un atome de chlore ou $-OR^{1'}$ dans lequel $R^{1'}$ est un groupe alkyle ayant 1 à 8 atomes de carbone ou $-CH_2CH=CH_2$, et Z' est $-CH=CH_2$, $-CH_2CH_2Cl$ ou $-CH_2CH_2OSO_3H$, à la condition que lorsque x' est un atome de chlore, Y' ne représente pas un groupe méthoxy ou éthoxy.

5. Colorants disazoïques solubles dans l'eau selon la revendication 1, caractérisés en ce que les colorants sont représentés, sous la forme de l'acide libre, par la formule (I-ii)

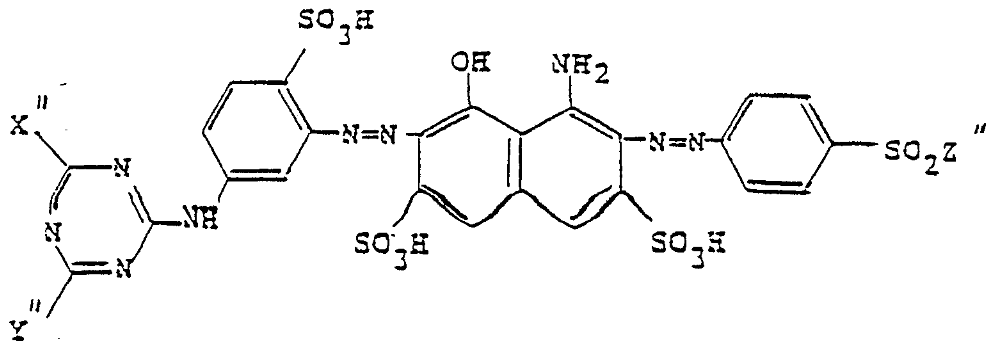

(I -ii)

dans laquelle X" représente un atome de chlore ou de fluor, Y" représente -OR[1"] dans lequel R[1"] représente un groupe alkyle ayant 1 à 4 atomes de carbone et Z" représente $-CH=CH_2$, $-CH_2CH_2Cl$ ou $-CH_2CH_2OSO_3H$, à la condition que lorsque X" est un atome de chlore, Y" ne représente pas un groupe méthoxy ou éthoxy.

**6.** Colorants diazoïques solubles dans l'eau selon la revendication 1, sous la forme de l'acide libre de la formule (I-a)

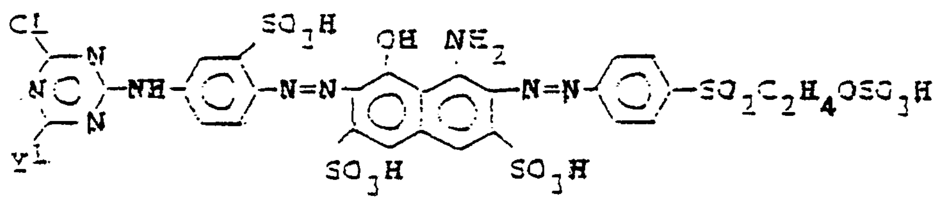

(I-a)

dans laquelle $Y^1$ représente un atome de chlore, un groupe $-OCH_3$ ou $-OC_2H_5$, ou de la formule (I-b)

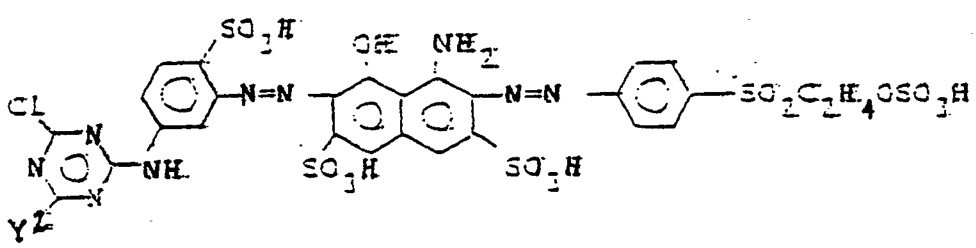

(I-b)

dans laquelle $Y^2$ représente un atome de chlore ou le groupe

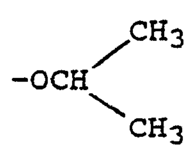 ou $-OCH_2CH=CH_2$.

**7.** Utilisation de colorants disazoïques de la formule (I) selon la revendication 1 pour la teinture de fibres contenant de la cellulose et de l'azote.

## Ansprüche

**1.** Wasserlösliche Disazofarbstoffe, dargestellt in Form der freien Säure durch die Formel (I)

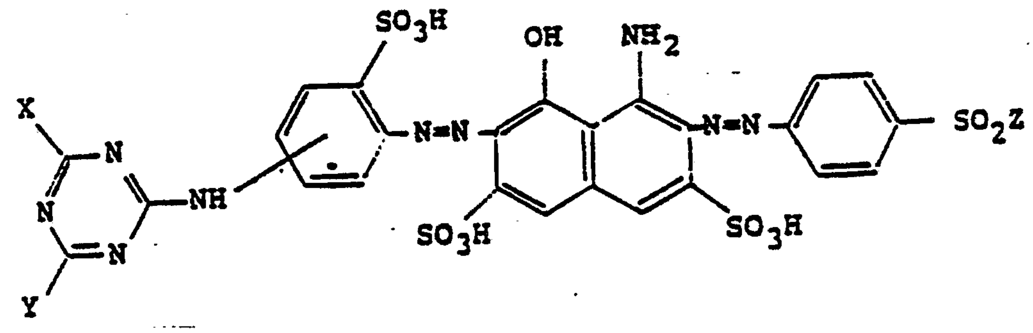

in der X ein Chlor- oder Fluoratom, Y ein Chloratom oder einen Rest der Formel $-OR^1$, wobei $R^1$ einen Alkylrest oder die Gruppe $-CH_2CH=CH_2$ bedeutet, und z eine der Gruppen $-CH=CH_2$, $-CH_2CH_2Cl$ oder $-CH_2CH_2OSO_3H$ bedeuten, mit der Maßgabe, daß Y, wenn X ein Chloratom ist und der Rest der Formel

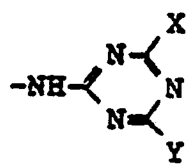

in der meta-Stellung des Benzolrings in Bezug auf die Azogruppe gebunden ist, keine Methoxy- oder Ethoxygruppe bedeutet.

2. Wasserlösliche Disazofarbstoffe nach Anspruch 1, in denen Y ein Chloratom oder einen Rest der Formel $-OR^1$, wobei $R^1$ ein Alkylrest, der 1 bis 8 Kohlenstoffatome aufweist, oder die Gruppe $-CH_2CH=CH_2$ ist, bedeutet.

3. Wasserlösliche Disazofarbstoffe nach Anspruch 1, in denen Y ein Chloratom oder ein Rest der Formel $-OR^1$, wobei $R^1$ ein Alkylrest, der 1 bis 4 Kohlenstoffatome aufweist, oder die Gruppe $-CH_2CH=CH_2$ ist, bedeutet.

4. Wasserlösliche Disazofarbstoffe nach Anspruch 1, in denen die Farbstoffe in Form der freien Säure durch die Formel (I-i) dargestellt sind,

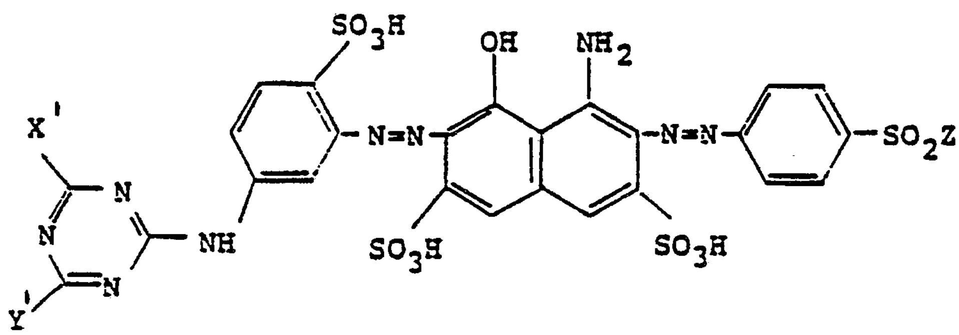

(I-i)

in der X' ein Chlor- oder Fluoratom, Y' ein Chloratom oder einen Rest der Formel $-OR^{1'}$, wobei $R^{1'}$ ein Alkylrest, der 1 bis 8 Kohlenstoffatome aufweist, oder die Gruppe $-CH_2CH=CH_2$ ist, und Z' eine der Gruppen $-CH=CH_2$, $-CH_2CH_2Cl$ oder $-CH_2CH_2OSO_3H$ bedeuten, mit der Maßgabe, daß Y', wenn X' ein Chloratom ist, keine Methoxy- oder Ethoxygruppe bedeutet.

5. Wasserlösliche Disazofarbstoffe nach Anspruch 1, in denen die Farbstoffe in Form der freien Säure durch die Formel (I-ii) dargestellt sind,

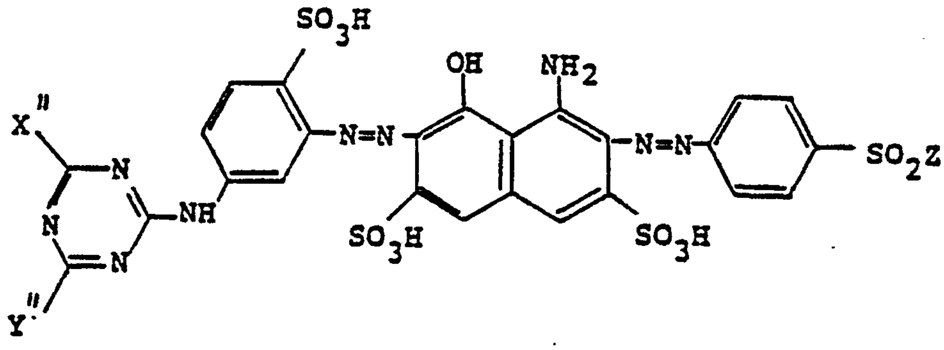 (I-ii)

in der X" ein Chlor- oder Fluoratom, Y" einen Rest der Formel $-OR^{1"}$, wobei $R^{1"}$ ein Alkylrest ist, der 1 bis 4 Kohlenstoffatome aufweist, und Z" eine der Gruppen $-CH=CH_2$, $-CH_2CH_2Cl$ oder $-CH_2CH_2OSO_3H$ bedeuten, mit der Maßgabe, daß Y", wenn X" ein Chloratom ist, keine Methoxy-oder Ethoxygruppe bedeutet.

**6.** Wasserlösliche Disazofarbstoffe nach Anspruch 1, in Form der freien Säure, mit der Formel (I-a)

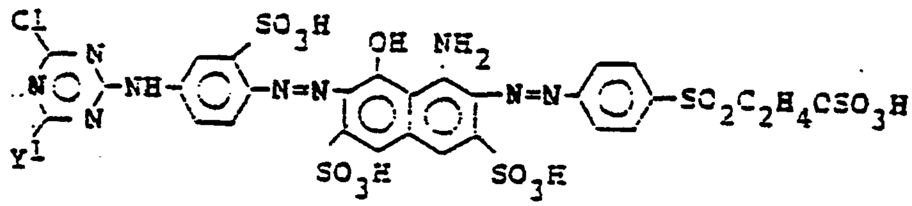 (I-a)

in der $Y^1$ ein Chloratom oder eine der Gruppen $-OCH_3$ oder $-OC_2H_5$ bedeutet, oder mit der Formel (I-b)

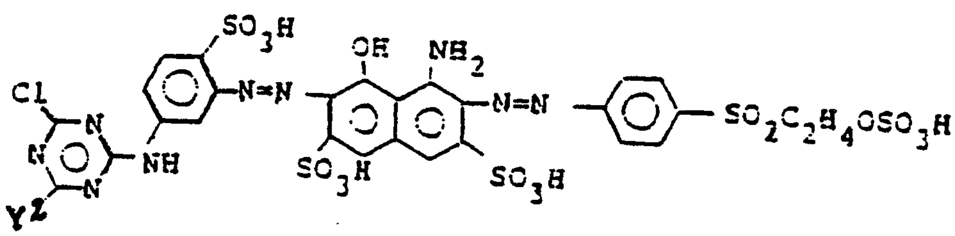 (I-b)

in der $Y^2$ ein Chloratom oder eine der Gruppen

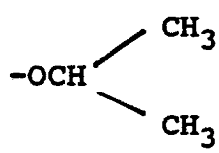

oder $-OCH_2CH=CH_2$ bedeutet.

**7.** Verwendung der Disazofarbstoffe der Formel (I) nach Anspruch 1 zur Färbung von Cellulose und Stickstoff enthaltenden Fasern.